# EUROPÄISCHE PATENTSCHRIFT

(11) **EP 3 425 598 B1**
(45) Veröffentlichungstag und Bekanntmachung des Hinweises auf die Patenterteilung: **25.09.2024**
(21) Anmeldenummer: 18181411.2
(22) Anmeldetag: 03.07.2018
(51) Int. Cl.: G07C 9/00, G06F 21/32, G07F 19/00

(54) **VERFAHREN ZUR VERWALTUNG EINES ÖFFNUNGSZUSTANDES EINES WERTBEHÄLTNISSES UNTER VERWENDUNG EINES AUF EINEM BIOMETRISCHEN DATENSATZ BASIERENDEN CODES**
METHOD FOR MANAGING AN OPENING STATE OF A CONTAINER USING A UNIQUE CODE BASED ON BIOMETRIC DATA
PROCÉDÉ DE GESTION D'UN ÉTAT D'OUVERTURE D'UN COFFRE-FORT À L'AIDE D'UN CODE UNIQUE BASÉ SUR DES DONNÉES BIOMÉTRIQUES

(30) Priorität: 06.07.2017 DE 102017115086
(43) Veröffentlichungstag der Anmeldung: 09.01.2019
(73) Patentinhaber: Insys Microelectronics GmbH, 93049 Regensburg (DE)
(72) Erfinder: Bauer, Mario, 93107 Thalmassing (DE); Lücke, Detlef, 93077 Bad Abbach (DE)
(74) Vertreter: Hannke Bittner & Partner mbB Regensburg

(56) Entgegenhaltungen:
- EP-A1- 2 083 397
- EP-A1- 2 920 731
- EP-A2- 0 649 957
- WO-A1-2016/132120
- JP-A- 2001 067 523
- US-A1- 2003 179 075
- US-A1- 2008 024 272
- MARASCO EMANUELA ET AL: "Privacy protection schemes for fingerprint recognition systems", PROCEEDINGS OF SPIE, IEEE, US, vol. 9457, 14 May 2015 (2015-05-14), pages 94570D - 94570D, XP060052785, ISBN: 978-1-62841-730-2, DOI: 10.1117/12.2178978

## Beschreibung

Die Erfindung betrifft ein Verfahren zur Verwaltung eines Öffnungszustandes eines Wertbehältnisses.

Wertbehältnisse sind aus dem Bereich des Cash-Handling (deutsch: "Bargeldabwicklung, Bargeldlogistik") bekannt und werden beispielsweise im Einzelhandel als Safe oder bei Kreditinstituten als Geldautomat bzw. Geldautomatenschrank zur Sicherung von Geldbeträgen eingesetzt.

Die folgende Beschreibung bezieht sich zwar der Einfachheit halber nur auf Geldautomaten, gilt aber analog auch für die erwähnten Safes oder für andere hinsichtlich ihrer Sicherungsart vergleichbare Wertbehältnisse. Ein Wertbehältnis kann im Sinne der Erfindung außerdem auch allgemein ein gesicherter Bereich sein, zu dessen Zugang mindestens eine Sicherheitsmaßnahme zu überwinden ist (Beispiele hierfür sind Räume von Forschungslaboratorien, Eigenheime, Schließfachbereiche einer Bank etc.).

Zur Sicherung dieser Wertbehältnisse werden zumeist Hochsicherheitsschlösser eingesetzt. Diese sichern beispielsweise den Zugang zu den Geldfächern der Geldautomaten und können nur durch spezielle Sicherheitsmechanismen wie etwa der Eingabe eines Codes geöffnet werden, welcher beispielsweise einem Mitarbeiter des Geldinstituts bzw. einem Wertdienstleister (im Folgenden als "Benutzer" oder als "autorisierter Benutzer" bezeichnet) bekannt ist. Ferner wird jedem einzelnen Benutzer meistens eine eigene PIN und/ oder eine eigene Personalnummer zugeteilt, mittels derer er im System eindeutig identifizierbar ist.

Eines oder mehrere dieser Schlösser befinden sich beispielsweise an der Hinterseite des Geldautomaten und sind somit für den (Standard-)Bankkunden nicht sichtbar. Schlösser an der Vorderseite sind beispielsweise durch ein zusätzliches Blech abgedeckt. Nach erfolgreichem Passieren der Sicherheitsmaßnahmen, welche beispielsweise anhand von einigen Schritten des nachfolgend erläuterten Verfahrens abgebildet sind, kann der autorisierte Benutzer das Schloss bzw. die Schlösser öffnen und Geld nachfüllen bzw. entnehmen.

Zum heutigen Zeitpunkt ist es beispielsweise erforderlich, dass der Benutzer zum Öffnen des Wertbehältnisses seine eigene PIN sowie einen Schlüssel für das Schloss mit sich führt, was ein hohes Risiko darstellt, da beispielsweise Schlüssel oder PIN unrechtmäßig entwendet werden können.

Aus dem Stand der Technik ist bekannt, das Wertbehältnis mittels einer Kombination aus einer benutzerspezifischen PIN und einem am Wertbehältnis einlesbaren Fingerabdruck zu entriegeln. Nachteilig ist jedoch, dass sowohl die PIN als auch mindestens ein Fingerabdruck jedes in Frage kommenden Benutzers am Wertbehältnis gespeichert werden muss, damit ein Abgleich der Datensätze stattfinden kann. Dies ist zum einen zeitaufwändig, da theoretisch die PIN und ein Fingerabdruck jedes neuen Benutzers an jedem in Frage kommenden Wertbehältnis gespeichert werden muss. Zum anderen ist die Speicherung personenbezogener Daten am Wertbehältnis aus Datenschutzgründen als kritisch anzusehen.

Das Dokument JP 2001 067523 A beschreibt ein Verfahren zur Verwendung einer Geldkarte mit einem Bankautomaten mittels Fingerabdruck. Es umfasst die Schritte eines Erfassens von ersten Fingerabdruck-Daten eines Benutzers und Speichern dieser ersten Daten auf der Geldkarte. Die Geldkarte wird in einen Bankautomaten eingegeben und die darauf gespeicherten ersten Fingerabdruck-Daten werden mit zweiten Fingerabdruck-Daten des Benutzers verglichen, welche mittels eines Fingerabdruck-Scanners am Bankautomaten erfasst wurden. Bei einer Übereinstimmung der ersten und zweiten Daten kann eine Transaktion durchgeführt werden.

Das Dokument EP 2 083 397 A1 zeigt ein System zur Abholung von Bargeld in Bank- oder Handelsfilialen durch Mitarbeiter von Werttransportunternehmen. Dabei befinden sich die Daten des Werttransportunternehmens und der Bank- oder Handelsfilialen (beispielsweise biometrische Daten der Mitarbeiter) auf einem zentralen Server, welcher auch zum Abgleich von Daten dient. Tourplanungsdaten, wie Tag, Ankunftszeit und Mitarbeiter werden von dem Werttransportunternehmen vorab an die Bank- oder Handelsfiliale gesendet oder können vom Server abgerufen werden. In der Bank- oder Handelsfiliale kann sich der Mitarbeiter des Werttransportunternehmens mittels Fingerabdruck, der mit Stammdaten auf dem Server verglichen wird, identifizieren.

Das Dokument WO 2016/132120 A1 offenbart ein Sicherheitstransportfahrzeug mit einer Sicherheitskammer und einer Transportvorrichtung. Die WO 2016/132120 A1 wird lediglich als technologischer Hintergrund im Zusammenhang mit Automatisierung zitiert.

Das Dokument US 2003/179075 A1 beschreibt ein Zugriffssystem für Schlösser in welchem beispielweise Türschlüssel sicher aufbewahrt werden können. Dazu kann ein Benutzer mittels eines Programms auf einem Computer einen Öffnungscode generieren lassen. Eine Authentifizierung des Benutzers an dem Computer kann beispielsweise mittels Erkennung von biometrischen Daten erfolgen. Der Öffnungscode wird mittels Daten des speziellen Benutzers (zugeordneter Code) und des Schlosses (Seriennummer) sowie Datum/Zeit generiert. Dieser Öffnungscode kann am Zugriffssystem eingegeben werden. Das Schloss generiert einen eigenen Öffnungscode analog zum Computer und vergleicht die beiden Öffnungscodes auf Übereinstimmung.

Die Erfindung hat daher die Aufgabe, das Verfahren zum Öffnen und/ oder Schließen eines Wertbehältnisses anhand eines erfindungsgemäßen Verfahrens und prozesssicherer zu gestalten. Außerdem soll eine unerlaubte Entwendung von Wertgegenständen aus dem Wertbehältnis bzw. analog dazu ein unerlaubtes Eindringen in einen gesicherten Bereich verhindert werden. Falls dieses Ereignis doch geschieht, soll es ermöglicht werden, einem dem System bekannten Benutzer dieses Ereignis zuzuweisen.

Die Aufgabe wird gelöst durch den Gegenstand des Anspruchs 1.

Es ist also vorgesehen, dass der biometrische Datensatz eines Benutzers (Fahrer bzw. Wertdienstleister) beispielsweise zu Beginn des Beschäftigungsverhältnisses über eine entsprechende erste Erfassungseinheit bevorzugt einmalig erfasst wird (Schritt (101)). Beispielsweise bedeutet dies, dass der Benutzer den Fingerabdruck (Fingerprint) seines rechten Zeigefingers an einem ersten Fingerabdruckscanner einlesen lässt. Bevorzugt erfolgt dies räumlich getrennt von dem zu öffnenden Wertbehältnis; beispielsweise ist in den Räumlichkeiten der Firmenzentrale des Wertdienstleisters die erste Erfassungseinheit angeordnet. Dieser biometrische Datensatz wird in einen ersten numerischen Datensatz (mathematisches Zahlenmuster) übersetzt (Schritt (102)) und nach einer nicht unter die Erfindung fallenden Ausführungsform als ein dem Benutzer zugeordnetes persönliches Template (Vorlage), beispielsweise auf einer Speichereinheit des Systems, abgespeichert.

Auch dieser Schritt (102) wird wie auch der Schritt (101) bevorzugt nur einmalig durchgeführt bzw. muss nur einmalig durchgeführt werden. Ferner sind der Schritt (101) und/ oder der Schritt (102) ohne das Wertbehältnis, mithin von diesem unabhängig und/ oder örtlich getrennt vom Wertbehältnis durchführbar.

Erfindungsgemäß wird der ursprüngliche biometrische Datensatz nicht im System gespeichert. Nach einer nicht unter die Erfindung fallenden Ausführungsform erlaubt der erste numerische Datensatz keinen Rückschluss auf den zugrundeliegenden biometrischen Datensatz. Damit muss der Benutzer nicht befürchten, dass seine sensiblen biometrischen Daten von anderen Angestellten eingesehen und/ oder missbraucht werden.

Erfindungsgemäß ist vorgesehen, dass der erste numerische Datensatz nur zur Generierung des Öffnungscodes (Schritt (103)) verwendet und anschließend gelöscht wird.

Erfindungsgemäß erfolgt die Übersetzung des biometrischen Datensatzes in den ersten numerischen Datensatz (also gemäß der Schritte (102) und/ oder (107)) ebenfalls mittels eines geeigneten weiteren Generierungsvorgangs und mittels der Recheneinheit des Systems. Dieser weitere Generierungsvorgang kann beispielsweise als "zweiter Generierungsvorgang" bezeichnet werden. Der Generierungsvorgang aus den Schritten (103) und (108) wird zur Unterscheidung als "erster Generierungsvorgang" bezeichnet.

Zumindest auf der Grundlage dieses numerischen Datensatzes errechnet die Recheneinheit dann einen Öffnungscode (Schritt (103)) und gibt diesen an den Benutzer aus (Schritt (104)). Diese Ausgabe erfolgt per Übermittlung an ein mobiles Endgerät des Benutzers. Der gleiche Benutzer fährt beispielsweise anschließend oder auch zeitlich versetzt zum Standort des zu öffnenden Wertbehältnisses und gibt dort gemäß Schritt (105) den ihm aus Schritt (104) bekannten Öffnungscode am Wertbehältnis (an einer Eingabeeinheit des Wertbehältnisses) ein.

Anschließend wird der gleiche biometrische Datensatz des Benutzers über eine entsprechende zweite Erfassungseinheit des Wertbehältnisses erneut erfasst (Schritt (106)). Beispielsweise bedeutet dies, dass der Benutzer den Fingerabdruck (Fingerprint) seines rechten Zeigefingers erneut an einem zweiten Fingerabdruckscanner des Wertbehältnisses einlesen lässt. Dieser biometrische Datensatz wird durch das Wertbehältnis bzw. einer geeigneten Recheneinheit des Wertbehältnisses in einen zweiten numerischen Datensatz (mathematisches Zahlenmuster) übersetzt (Schritt (107), analog zum Schritt (102)), wobei natürlich jeweils der gleiche zweite Generierungsvorgang für die Schritte (102) und (107) verwendet wird.

Im Schritt (108) wird durch das Wertbehältnis bzw. der Recheneinheit des Wertbehältnisses der gleiche erste Generierungsvorgang wie im Schritt (103) auf Basis zumindest des zweiten numerischen Datensatzes ausgeführt, wodurch ein zweiter Öffnungscode generiert wird. Dann werden im Schritt (109) der erste und der zweite Öffnungscode miteinander verglichen; mittels der Recheneinheit des Wertbehältnisses. Stimmen beide Öffnungscodes überein, wird gemäß Schritt (110) die Sicherungseinrichtung des Wertbehältnisses entsperrt; dieser Befehl kann beispielsweise von der Steuereinrichtung des Wertbehältnisses erfolgen. Der Benutzer erhält also Zugang zum Inneren des Wertbehältnisses. Damit gilt, dass ein Öffnungscode automatisch dann als gültig erachtet wird, wenn Schritt (109) eine Übereinstimmung ergibt. Es muss also vorteilhaft nicht eine zusätzliche Validierung dieses Öffnungscodes erfolgen, welche beispielsweise von extern oder über eine Datenleitung abgefragt oder mittels einer Übereinstimmungsprüfung zwischen einem auf dem Wertbehältnis gespeicherten Datensatz und dem Öffnungscode durchgeführt werden muss.

Der Vorteil dieses Verfahrens liegt darin, dass zwar der Benutzer sowohl durch die erste als auch durch die zweite Erfassungseinheit anhand seiner biometrischen Daten eindeutig erkannt werden kann, diese biometrischen Daten hierfür aber dennoch nicht im System gespeichert werden müssen. Demnach müssen auch am Wertbehältnis selbst keine sensiblen Daten oder Informationen über den Benutzer abgespeichert oder gar mühevoll aktualisiert werden. Im Gegenteil reicht es aus, wenn am Wertbehältnis der gleiche erste Generierungsvorgang ausführbar ist wie von der der ersten Erfassungseinheit zugeordneten Recheneinheit des Systems.

Insbesondere müssen am Wertbehältnis zur Ausführung des erfindungsgemäßen Verfahrens weder der biometrische noch der darauf basierende numerische Datensatz abgespeichert werden.

Erfindungsgemäß umfasst das Wertbehältnis eine dem Benutzer zur Verfügung stehende Bedieneinheit mit einer Anzeigeeinrichtung in Form eines Touchpads. Alternativ dazu kann die Bedieneinheit eine nicht-berührungssensitive Anzeigeeinrichtung und mindestens einen Tastenblock aufweisen.

Gemäß einer erfindungsgemäßen Weiterbildung des Verfahrens ist es vorgesehen, dass mindestens ein weiterer Datensatz im Schritt (103) und (108) für die Generierung des ersten und des zweiten Öffnungscodes verwendet wird, wobei der mindestens eine weitere Datensatz ausgewählt ist aus einer Seriennummer des Wertbehältnisses und einer Information bezüglich eines Standorts des Wertbehältnisses. Nach einer nicht unter die Erfindung fallenden Ausführungsform ist der mindestens eine weitere Datensatz ausgewählt aus einem aktuellen Datum als dritten Datensatz und/oder einer aktuellen Uhrzeit als vierten Datensatz.

Diese Datensätze liegen ebenfalls jeweils als numerischer Datensatz vor, damit der erste Generierungsvorgang diese verwenden kann. Alternativ werden diese Datensätze ebenfalls mittels eines geeigneten Generierungsvorgangs in numerische Datensätze gewandelt.

Aus diesen Datensätzen wird durch den ersten Generierungsvorgang der gültige Öffnungscode vorab erzeugt. Das heißt also, dass beispielsweise für einen bestimmten Benutzer an einem bestimmten Wochentag zu einer bestimmten Uhrzeit ein berechneter Öffnungscode gültig ist und der Benutzer also mittels dieses Öffnungscodes das Wertbehältnis zu den angegebenen Bedingungen öffnen kann.

Gemäß den Schritten (103) bzw. (108) wird der gleiche erste Generierungsvorgang verwendet.

Bevorzugt sind der aktuelle Wochentag sowie die aktuelle Uhrzeit auf dem Wertbehältnis abgespeichert. Es kann alternativ dazu vorteilhaft sein, wenn das Wertbehältnis zu einem vorgebbaren Zeitintervall diese Datensätze von einem Server abfragt und sich damit aktualisiert; beispielsweise ist dieser Server ein der Atomuhr zugeordnete Zeitserver (beispielsweise der Server der Physikalisch-Technischen Bundesanstalt (PTB) in Braunschweig). Allerdings wird hier eine Datenverbindung nach extern benötigt, was möglicherweise als sicherheitsgefährdend erachtet wird.

Es kann weiterhin vorteilhaft sein, wenn während des Verfahrens oder nach dem Verfahren ein Abgleich zwischen dem aktuellen Datum und der aktuellen Uhrzeit zwischen dem Benutzer und dem Wertbehältnis erfolgt. Dazu kann es beispielsweise vorteilhaft sein, wenn der Benutzer an der Eingabeeinheit des Wertbehältnisses das ihm als aktuell bekannte Datum sowie die ihm als aktuell bekannte Uhrzeit eingibt und/ oder mittels dieser Eingabe die entsprechenden Daten des Wertbehältnisses aktualisiert werden. Der Vorteil liegt hier darin, dass das Wertbehältnis keine Datenverbindung zu externen Einrichtungen oder Servern aufbauen muss, was die Sicherheit erhöht. Andererseits ist sichergestellt, dass die Einstellungen des Wertbehältnisses aktuell bleiben. Um Manipulationen zu vermeiden, kann es vorteilhaft sein, diesen Abgleich erst nach dem Schritt (110) durchführen zu können.

Gemäß einer vorteilhaften Weiterbildung des Verfahrens ist Folgendes vorgesehen:
(103a, 108a) Ausführen des Generierungsvorgangs in den Schritten (103) und (108) auf Basis zumindest des ersten oder zweiten Datensatzes sowie des dritten Datensatzes und des vierten Datensatzes, wodurch der erste oder der zweite Öffnungscode generiert wird,
(109) Vergleichen des ersten und des zweiten Öffnungscodes,
(108a) Wiederholen des Schrittes (108a) mit einem um ein bestimmtes Zeitintervall veränderten vierten Datensatz, falls gemäß Schritt (109) der erste und der zweite Öffnungscode nicht übereinstimmen.

Wie sich in der Praxis gezeigt hat, ist es unrealistisch, dass der Benutzer genau zur vorgesehenen Uhrzeit am Wertbehältnis steht. Daher ist dieser Uhrzeit vorteilhaft ein Zeitfenster zugeordnet, innerhalb welchem der Öffnungscode gültig ist. Bevorzugt umfasst dieses Zeitfenster mehrere Minuten (beispielsweise 15 min) oder mehrere Stunden (beispielsweise 1h, 4h, 6h, 12h oder 24h).

Beispielsweise ist am Wertbehältnis die Information über die Dauer des gültigen Zeitfensters fest hinterlegt. Bei einem 24h-Zeitfenster wird beispielsweise die Uhrzeit bevorzugt nicht in den ersten Generierungsvorgang zur Berechnung des Öffnungscodes einbezogen.

Bei einem kleineren Zeitfenster von beispielsweise 2h stellt das Wertbehältnis zunächst die aktuelle Uhrzeit fest (Beispiel: "Es ist 13 Uhr"). Anschließend erfolgt ein Vergleich des ersten und des zweiten Öffnungscodes (Schritt (109)). Ist dieser negativ und stimmen damit der erste und der zweite Öffnungscode nicht überein, berechnet das Wertbehältnis einen neuen Öffnungscode für eine Zeit, die sich um ein bestimmtes Zeitintervall von der aktuell festgestellten Uhrzeit unterscheidet.

Beispielsweise ist dieses Zeitintervall eine Stunde. Damit berechnet das Wertbehältnis einen neuen Öffnungscode für die Zeit von 12 Uhr bzw. 14 Uhr (und evtl. anschließend für die Zeit von 11 Uhr oder 15 Uhr), um der Möglichkeit Rechnung zu tragen, dass Benutzer evtl. nicht zur vorgesehenen Zeit am Wertbehältnis eingetroffen ist. Sobald einer der durchgeführten Vergleiche positiv ist, wird die Wiederholung des Schrittes (109) beendet und das Wertbehältnis kann geöffnet werden (Schritt (110)). Damit ist das Verfahren beendet.

Der Schritt (108a) ist vorteilhaft zunächst beliebig oft wiederholbar. Ist unter Berücksichtigung des vorgesehenen Zeitfensters jedoch keiner der durchgeführten Vergleiche positiv, wird die Öffnung des Wertbehältnisses verweigert. Dies kann dem Benutzer beispielsweise über eine am Wertbehältnis vorgesehene Anzeigeeinrichtung mitgeteilt werden.

Bevorzugt erfolgt die Berechnung des Öffnungscodes nur auf Basis der aktuellen Stunde (Beispiel: 13 Uhr) und nicht der aktuellen Minute (Beispiel: 13:25 Uhr) oder gar Sekunde (Beispiel: 13:25:07 Uhr). Dies spart Rechenkapazität und sorgt damit für ein schnelleres Ergebnis.

Gemäß einer vorteilhaften Variante des Verfahrens ist es vorgesehen, dass der erste und der zweite Öffnungscode jeweils ein numerischer Code sind und/ oder 6- bis 8-stellig ausgebildet sind.

Je weniger Stellen der Öffnungscode hat, desto schneller erfolgen dessen Berechnung mit Hilfe des ersten Generierungsvorgangs und dessen Eingabe durch den Benutzer; das Verfahren kann also schneller durchgeführt werden. Je mehr Stellen der Öffnungscode hat, desto sicherer ist das Verfahren, da die Wahrscheinlichkeit, dass der korrekte Öffnungscode durch einen anderen Benutzer, welcher diesen korrekten Öffnungscode nicht kennt, eingegeben werden kann, sinkt.

Gemäß einer bevorzugten Verfahrensvariante ist es vorgesehen, dass der biometrische Datensatz ein Fingerabdruck, eine Handgeometrie, ein Irismuster oder ein Klangmuster einer Stimme des Benutzers ist. Es hat sich in der Praxis gezeigt, dass die Akzeptanz bezüglich der Erfassung des biometrischen Datensatzes beim Fingerabdruck hoch ist, wohingegen das Erfassen (Scannen) der Iris, also des eigenen Auges, als unangenehm empfunden wird.

Ferner ist es erfindungsgemäß vorgesehen, dass der erste Generierungsvorgang deterministisch ausgestaltet ist und/ oder der erste und der zweite Öffnungscode Einmalcodes sind.

Bei einem deterministischen Generierungsvorgang ist zu jedem Zeitpunkt seiner Ausführung der Folgeschritt eindeutig bestimmt; der Generierungsvorgang liefert also bei der gleichen Eingabe immer die gleiche Ausgabe. Dahingegen weist ein nicht-deterministischer Generierungsvorgang an mindestens einer Stelle zwei oder mehr Möglichkeiten der Fortsetzung auf, zwischen welchen gewählt werden kann; der Generierungsvorgang wird also durch einen Zufallsmechanismus beeinflusst.

Werden also zur Generierung des Öffnungscodes in zwei Fällen nur einer oder mehrere Datensätze verwendet, die sich in beiden Fällen nicht unterscheiden (beispielsweise der erste numerische Datensatz und/ oder die Uhrzeit, welche für zwei unterschiedliche Tage gilt, aber zufällig gleich ist), so müsste zur Generierung eines Einmalcodes ein nicht-deterministischer Generierungsvorgang verwendet werden. Andernfalls wird bei der Verwendung eines deterministischen Generierungsvorgang in beiden Fällen der gleiche Öffnungscode generiert.

Werden dagegen einer oder mehrere Datensätze verwendet, die sich in beiden Fällen unterscheiden (beispielsweise das aktuelle Datum), so kann zur Generierung eines Einmalcodes ein deterministischer oder ein nicht-deterministischer Generierungsvorgang verwendet werden.

Bevorzugt führen also die zur Ausübung des ersten Generierungsvorgangs verwendeten Datensätze zu einem eindeutigen Einmalcode als Öffnungscode. Weiter bevorzugt führt der Öffnungscode aber nicht zu den zugrundeliegenden Daten. Dies ist alleine schon deswegen verständlich, da es für die Generierung eines beispielsweise sechs- bis achtstelligen Nummerncodes zunächst eine Anzahl von 10⁶ bis 10⁸ Kombinationsmöglichkeiten der einzelnen Stellen gibt. Andererseits ist vorgesehen, dass die numerische Größenordnung der zugrundeliegenden Datensätze diese Anzahl um mindestens eine Zehnerpotenz überschreitet.

Damit ist auch die Möglichkeit gegeben, dass der erste Generierungsvorgang aus zwei unterschiedlichen biometrischen Datensätzen (beispielsweise eines ersten und eines zweiten Benutzers) den gleichen Öffnungscode ermittelt.

Der Vorteil dieser Verfahrensvariante ist, dass die beschriebene Kombination aus einem Einmalcode und dem biometrischen Datensatz, beispielsweise in Form eines Fingerabdrucks, gemäß den Normen der Zertifizierungsstellen VdS und ECB-S zertifiziert ist. Im Sinne der Erfindung wird unter dem Begriff "Einmalcode" verstanden, dass die Informationen, welche der Einmalcode enthält, sich von vorhergehenden und/ oder nachfolgenden Einmalcodes zumindest bezüglich eines Parameters unterscheiden. So ist zum Beispiel gewährleistet, dass bei einem Öffnungscode, welcher als numerischer Code anhand einer Reihenfolge von beispielsweise sechs Ziffern ausgebildet ist, die Reihenfolge eines ersten Einmalcodes sich zumindest bezüglich einer Ziffer von der Reihenfolge eines zweiten Einmalcodes unterscheidet.

Erfindungsgemäß ist es vorgesehen, dass das System frei von einer Datenverbindung zwischen dem Wertbehältnis und der Recheneinheit ist.

Das Wertbehältnis und dessen Einrichtungen sind zudem beispielsweise als Inselsystem ausgebildet und weisen somit keine Datenverbindungen zu externen Einrichtungen auf. Dies erhöht die Sicherheit des Verfahrens enorm, da ein Angriff (Hack) auf das Wertbehältnis von extern somit extrem erschwert ist.

Weiterhin bevorzugt kann zwischen verschiedenen ersten und/ oder zweiten Generierungsvorgängen gewählt werden, um die Sicherheit des Verfahrens zusätzlich zu erhöhen. Dabei kann vorgesehen sein, dass zur Berechnung des Öffnungscodes mittels der Recheneinheit des Systems ein anderer erster Generierungsvorgang verwendet wurde. Dann wird seitens des Wertbehältnisses ähnlich wie bei der Toleranz bezüglich des Zeitfensters nach einer vorbestimmbaren Zahl an negativen Vergleichen des ersten und des zweiten Öffnungscodes der ebenfalls auf dem Wertbehältnis gespeicherte andere erste Generierungsvorgang zur Berechnung des Öffnungscodes verwendet.

Optional kann es vorgesehen sein, dass dem System zwei biometrische Datensätze eines einzelnen Benutzers bekannt sind. Aufgrund dieser Datensätze werden gemäß obigem Verfahren zwei verschiedene Öffnungscodes berechnet. Beispielsweise gilt der eine Öffnungscode für die biometrischen Daten des linken Zeigefingers des Benutzers, der andere für die biometrischen Daten dessen rechten Zeigefingers. Beide Öffnungscodes sind beispielsweise dazu geeignet, das Wertbehältnis zu öffnen; wird jedoch der Öffnungscode für die Daten des linken Zeigefingers ("Überfallfinger") des Benutzers eingegeben, so wird Alarm ausgelöst.

Dies kann dann vorteilhaft sein, wenn der Benutzer am Wertbehältnis von einem Dritten bedroht wird. Hierbei soll gewährleistet werden, dass das Wertbehältnis zwar geöffnet werden kann, um die Sicherheit des Benutzers nicht zu gefährden. Gleichzeitig sollen jedoch die Sicherheitskräfte alarmiert werden, ohne dass eine separate Notruftaste gedrückt werden muss.

Vorteile und Zweckmäßigkeiten sind der nachfolgenden Beschreibung in Verbindung mit der Zeichnung zu entnehmen.

Es zeigen:
- Fig. 1: einen Überblick über das für das erfindungsgemäße Verfahren verwendete System;
- Fig. 2: einen bevorzugten Ablauf des erfindungsgemäßen Verfahrens sowie von Verfahrensvarianten;
- Fig. 3: das erfindungsgemäße Verfahren im Überblick.

Es sei vorab erwähnt, dass das gezeigte Verfahren 100 und das gezeigte System S beispielsweise auch bei einem oben erwähnten Safe, wie er im Einzelhandel verwendet wird, angewendet werden können, auch wenn sich die Beschreibung der Figuren auf einen Geldautomaten einer Bank bezieht. Ebenfalls ist die Beschreibung des gezeigten Verfahrens 100 und des gezeigten Systems S auf einen Sicherheitsbereich übertragbar.

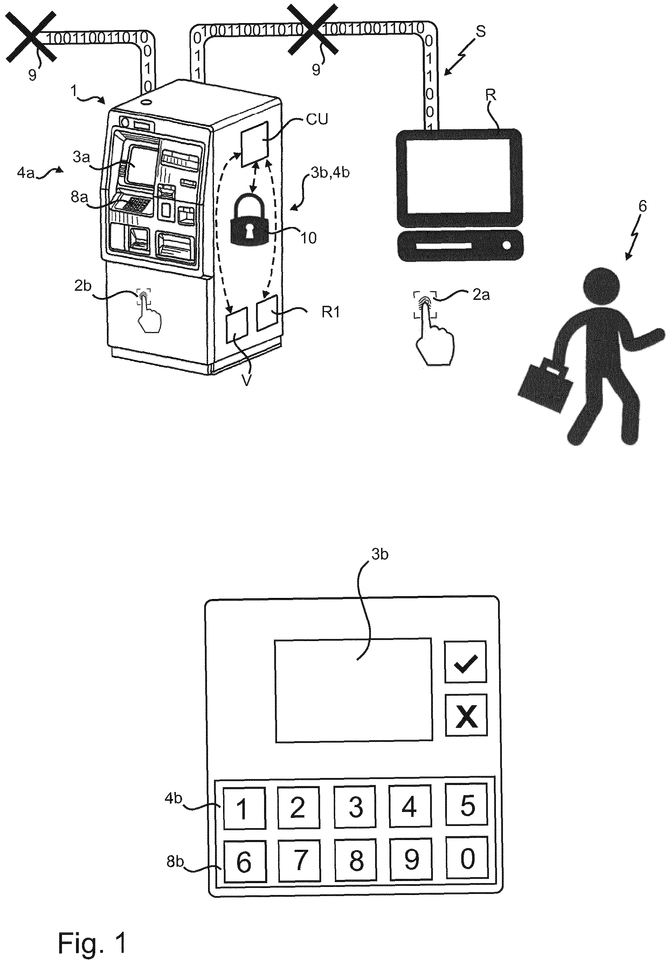

In Fig. 1 ist demnach ein Wertbehältnis 1 in Form eines Geldautomaten eines Geldinstituts wie beispielsweise einer Bank gezeigt, welches eine erste Anzeigeeinrichtung 3a sowie eine erste Bedieneinheit 4a umfasst. Die erste Bedieneinheit 4a umfasst beispielsweise noch ein Kartensteckfach für die Geldkarte des Kunden, eine erste Eingabeeinrichtung 8a mit Nummernfeld zur Eingabe der zur Geldkarte gehörenden PIN sowie ein Ausgabefach/Einlegefach für Banknoten. Diese Elemente 3a, 4a, 8a stehen dem Kunden der Bank zur Verfügung, wenn er Geld am Wertbehältnis 1 abheben oder einzahlen will, und werden im Folgenden nicht näher erläutert.

Mittels der Fig. 1 ist noch eine zweite Bedieneinheit 4b des Wertbehältnisses 1, umfassend eine zweite Anzeigeeinrichtung 3b in Form eines Displays und eine zweite Eingabeeinrichtung 8b in Form eines Tastenblocks, gezeigt.

Generell ist es auch möglich, dass der Benutzer 6 über die erste Bedieneinheit 4a das im Folgenden beschriebene Verfahren 100 startet, und hierzu beispielsweise an der Bedieneinheit 4a (beispielsweise durch Eingabe einer speziellen Tastenkombination) zunächst ein separates Bedienmenü öffnet. Bevorzugt ist im Rahmen der Erfindung jedoch, dass die dem Benutzer 6 zugeordnete Bedieneinheit 4b nicht auch dem Kunden der Bank zur Verfügung steht und somit als eigenständige Einheit ausgebildet ist. Die zweite Bedieneinheit 4b ist somit bevorzugt nicht Teil der ersten Bedieneinheit 4a, wird mithin auch nicht durch diese ausgebildet, und umgekehrt. Dies erhöht die Sicherheit des Verfahrens.

Ferner umfasst das Wertbehältnis 1 noch mindestens eine Steuerungseinheit CU (schematisch anhand der Fig. 1 gezeigt), welche Signale verarbeitet. Beispielsweise empfängt diese Steuerungseinheit CU Eingabesignale, welche durch das Betätigen der Tasten auf dem Tastenblock gesendet werden. Bestimmt durch diese Eingabesignale und einer entsprechenden auf dem Wertbehältnis 1 installierten Betriebssoftware kann die Steuerungseinheit CU dann Ausgabesignale senden. Beispielsweise ergeht so an die zweite Anzeigeeinrichtung 3b der Befehl, das der jeweils betätigten Taste zuordenbare Symbol anzuzeigen. Ebenfalls empfängt oder sendet die Steuereinrichtung Signale von den oder an die restlichen Einrichtungen des Wertbehältnisses 1 wie einer Vergleichseinheit V oder einer Recheneinheit R1 oder einer Sicherungseinrichtung 10.

Ebenfalls gezeigt ist gemäß der Fig. 1 ein Mitarbeiter einer CIT-Firma (CIT = Cash-In-Transit, Geldtransport) als Benutzer 6 gezeigt, welcher über seine Firma beispielsweise durch die Bank damit beauftragt ist, Wertbehältnisse 1 zu leeren und/ oder zu füllen.

Gemäß der Fig. 1 ist ferner schematisch veranschaulicht, dass die zweite Anzeigeeinrichtung 3b und die zweite Bedieneinheit 4b beispielsweise an der Rückseite des Wertbehältnisses 1 angeordnet sind.

Das Wertbehältnis 1 umfasst vorliegend noch die Sicherungseinrichtung 10 (anhand des Schlosssymbols schematisch veranschaulicht), welche sperr- und entsperrbar ist und im gesperrten Zustand den Inhalt des Wertbehältnisses 1 vor unbefugtem Zugriff schützen soll. Durch Überwindung von Sicherheitsmaßnahmen lässt sich die Sicherungseinrichtung 10 entsperren.

Das erfindungsgemäße Verfahren 100 zur Verwaltung eines Öffnungszustandes des Wertbehältnisses 1 wird bevorzugt mittels des geeigneten Systems S, welches das Wertbehältnis 1 und eine Recheneinheit R mit einer ersten Erfassungseinheit 2a umfasst, durchgeführt. Das Wertbehältnis 1 umfasst ferner eine zweite Erfassungseinheit 2b. Beide Erfassungseinheiten 2a, 2b sind in diesem Beispiel als Fingerabdruckscanner ausgebildet.

Wie in Fig. 1 anhand der Symbole für eine fehlende Datenverbindung 9 veranschaulicht, ist das System S frei von einer Datenverbindung zwischen dem Wertbehältnis 1 und der Recheneinheit R und insbesondere frei von einer Datenverbindung ausgehend von dem Wertbehältnis 1 nach extern.

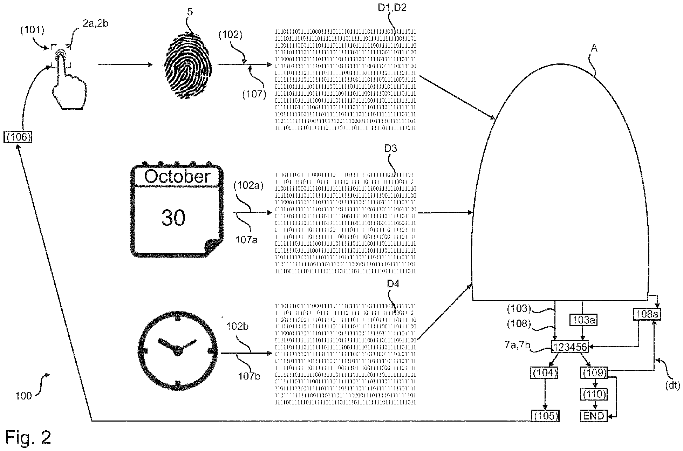

Zum Start des Verfahrens 100 gemäß Schritt (101) ist gemäß Fig. 2 vorgesehen, dass ein biometrischer Datensatzes 5 des Benutzers 6 mittels der ersten Erfassungseinheit 2a erfasst wird. In diesem Beispiel ist der Benutzer 6 in der Firma und lässt seinen rechten Zeigefinger scannen. Der dadurch ermittelte biometrische Datensatz 5 wird beispielsweise über die Recheneinheit R des Systems gemäß Schritt (102) in einen ersten numerischen Datensatz D1 umgewandelt.

Anschließend wird gemäß Schritt (103) ein erster Generierungsvorgang A auf Basis zumindest des ersten numerischen Datensatzes D1 mittels der ersten Recheneinheit R ausgeführt, wodurch ein erster Öffnungscode 7a generiert wird. Dieser wird in einem Schritt (104) an den Benutzer 6 ausgegeben.

Daraufhin fährt der Benutzer 6 beispielsweise zum entfernt von der ersten Recheneinheit R angeordneten Wertbehältnis 1 und gibt dort im Schritt (105) den ersten Öffnungscode 7a am Wertbehältnis 1 ein.

Im Schritt (106) wird der biometrische Datensatz 5 des Benutzers 6 mittels der zweiten Erfassungseinheit 2b, welche dem Wertbehältnis 1 zugeordnet ist, erfasst und im Schritt (107) ebenfalls in einen zweiten numerischen Datensatz D2 umgewandelt.

Gemäß Schritt (108) führt eine dem Wertbehältnis zugeordnete Recheneinheit auf Basis zumindest des zweiten numerischen Datensatzes D2 den gleichen ersten Generierungsvorgang A wie gemäß Schritt (103) aus, wodurch ein zweiter Öffnungscode 7b generiert wird.

Die gleiche Recheneinheit R des Wertbehältnisses 1 vergleicht dann gemäß Schritt (109) den ersten 7a und den zweiten Öffnungscode 7b. Stimmen gemäß Schritt (109) der erste 7a und der zweite Öffnungscode 7b überein, wird die Sicherungseinrichtung 10 entsperrt (Schritt (110)) und das Verfahren ist beendet (END).

Anhand der Fig. 2 ist noch gezeigt, dass in diesem Beispiel gemäß den Schritten (102a), (102b), (107a) und (107b) neben dem biometrischen Datensatz auch das aktuelle Datum und die aktuelle Uhrzeit in jeweils einen numerischen Datensatz D3, D4 umgewandelt werden. Beide Datensätze D3, D4 werden hier von dem Generierungsvorgang A für die Generierung der Öffnungscodes 7a und 7b verwendet.

Die Schritte (103) und (108) beschreiben das Ausführen des Generierungsvorgangs A auf Basis des ersten numerischen Datensatzes D1 (Schritt (103)) bzw. auf Basis des zweiten numerischen Datensatzes D2 (Schritt (108)). Die Schritte (103a) und (108a) beschreiben das Ausführen des Generierungsvorgangs A auf Basis des ersten D1, dritten D3 und vierten numerischen Datensatzes D4 (Schritt (103a)) bzw. auf Basis des zweiten D2, dritten D3 und vierten numerischen Datensatzes D4 (Schritt (108a)).

In diesem Beispiel sind sowohl der erste 7a als auch der zweite Öffnungscode 7b jeweils ein numerischer Code und 6-stellig ausgebildet (in diesem Beispiel entsprechen beide Öffnungscodes 7a, 7b der Ziffernabfolge "123456").

Ebenfalls gezeigt ist, dass der Schritt (108a) mit einem um ein bestimmtes Zeitintervall dt veränderten vierten Datensatz D4 wiederholt wird, falls gemäß Schritt (109) der erste 7a und der zweite Öffnungscode 7b nicht übereinstimmen. Hierfür wird beispielsweise angenommen, dass der zweite Öffnungscode 7b der Ziffernabfolge "123457" (nicht gezeigt) entspricht und deswegen nicht mit dem ersten Öffnungscode 7a übereinstimmt. Nach einer vorbestimmbaren Anzahl an Vergleichen gemäß Schritt (109) kann das Verfahren 100 auch ohne den Schritt (110) erfolglos beendet werden (END).

Es ist ferner der Einfachheit halber angenommen, dass sowohl der Schritt (102) als auch der Schritt (107) einen identischen numerischen Datensatz D1 und D2 generieren. Dies ist vorteilhaft ja auch der Fall, wenn in beiden Schritten die gleichen biometrischen Daten 5 verwendet werden.

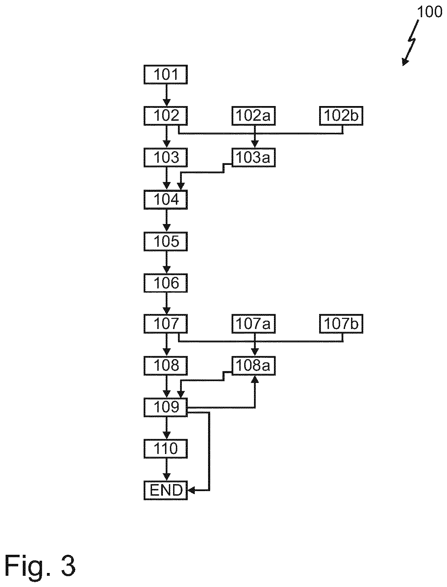

Die Fig. 3 zeigt das Verfahren 100 nochmals im Überblick mit Abfolge der Schritte (101) bis (110) bzw. dem Ende (END) des Verfahrens 100.

Das beschriebene System und das beschriebene Verfahren bieten also eine enorm hohe Sicherheit und Prozesssicherheit sowie eine schnelle Durchführbarkeit.

### Bezugszeichenliste

- 1: Wertbehältnis
- 2a, 2b: Erfassungseinheit
- 3a, 3b: Anzeigeeinrichtung
- 4a, 4b: Bedieneinheit
- 5: biometrischer Datensatz
- 6: Benutzer
- 7a, 7b: Öffnungscode
- 8a, 8b: Eingabeeinrichtung
- 9: Symbol für fehlende Datenverbindung
- 10: Sicherungseinrichtung
- 100: Verfahren
- 101-113: Schritte
- A: Generierungsvorgang
- D1, D2, D3, D4: numerischer Datensatz
- dt: Zeitintervall
- R: Recheneinheit
- S: System

## Patentansprüche

1. Verfahren (100) zur Verwaltung eines Öffnungszustandes eines Wertbehältnisses (1) mittels eines geeigneten Systems (S), welches das Wertbehältnis (1) und eine von dem Wertbehältnis (1) räumlich getrennte Recheneinheit (R) mit einer ersten Erfassungseinheit (2a) umfasst,
wobei das Wertbehältnis (1) eine sperr- und entsperrbare Sicherungseinrichtung (10) und eine zweite Erfassungseinheit (2b) umfasst,
umfassend die folgenden Schritte:
(101) Erfassen eines biometrischen Datensatzes (5) eines Benutzers (6) mittels der ersten Erfassungseinheit (2a), wobei der biometrische Datensatz (5) nicht im System (S) gespeichert wird,
(102) Umwandeln des biometrischen Datensatzes (5) mittels eines zweiten Generierungsvorgangs (A) und Speichern in einen ersten numerischen Datensatz (D1) durch die Recheneinheit (R),
(103) Ausführen eines ersten Generierungsvorgangs (A), der auf Basis zumindest des ersten numerischen Datensatzes (D1) und mindestens eines weiteren Datensatzes (D3, D4) mittels der ersten Recheneinheit (R) einen ersten Öffnungscode (7a) generiert, wobei der mindestens eine weitere Datensatz (D3, D4) ausgewählt ist aus einer Seriennummer des Wertbehältnisses (1) und einer Information bezüglich eines Standorts des Wertbehältnisses (1), wobei der erste numerische Datensatz nur zur Generierung des Öffnungscodes verwendet und anschließend gelöscht wird,
(104) Ausgeben des ersten Öffnungscodes (7a) per Übermittlung an ein mobiles Endgerät eines Benutzers,
(105) Übermitteln des ersten Öffnungscodes (7a) an das Wertbehältnis (1) über eine Bedieneinheit (4a, 4b) durch den Benutzer und anschließend
(106) Erfassen des biometrischen Datensatzes (5) des Benutzers (6) mittels der zweiten Erfassungseinheit (2b),
(107) Umwandeln des biometrischen Datensatzes (5) mittels des zweiten Generierungsvorgangs (A) in einen zweiten numerischen Datensatz (D2),
(108) Nochmaliges Ausführen des ersten Generierungsvorgangs (A) durch die dem Wertbehältnis zugeordneten Recheneinheit, der auf Basis zumindest des zweiten numerischen Datensatzes (D2) und des mindestens einen weiteren Datensatzes (D3, D4) einen zweiten Öffnungscode (7b) generiert,
(109) Vergleichen des ersten (7a) und des zweiten Öffnungscodes (7b) durch die dem Wertbehältnis zugeordneten Recheneinheit,
(110) Entsperren der Sicherungseinrichtung (10), falls gemäß dem Vergleichsschritt
(109) der erste (7a) und der zweite Öffnungscode (7b) übereinstimmen, wobei das System (S) frei von einer Datenverbindung zwischen dem Wertbehältnis (1) und der Recheneinheit (R) ist, wobei der erste und zweite Generierungsvorgang (A) deterministisch ausgestaltet sind und/ oder der erste (7a) und der zweite Öffnungscode (7b) Einmalcodes sind.

2. Verfahren (100) nach Anspruch 1,
**dadurch gekennzeichnet, dass**
der erste (7a) und der zweite Öffnungscode (7b) jeweils ein numerischer Code sind und/ oder 6- bis 8-stellig ausgebildet sind.

3. Verfahren (100) nach Anspruch 1 oder 2,
**dadurch gekennzeichnet, dass**
der biometrische Datensatz (5) ein Fingerabdruck, eine Handgeometrie, ein Irismuster oder ein Klangmuster einer Stimme des Benutzers (6) ist.

## Claims

1. Method (100) for managing an opening state of a value container (1) by means of a suitable system (S), which comprises the value container (1) and a computing unit (R) spatially separated from the value container (1) and having a first detection unit (2a), wherein the value container (1) comprises a lockable and unlockable security device (10) and a second detection unit (2b),
comprising the following steps:
(101) Capturing a biometric data set (5) of a user (6) by means of the first capture unit (2a), wherein the biometric data set (5) is not stored in the system (S),
(102) Converting the biometric data set (5) by means of a second generating process (A) and storing it in a first numerical data set (D1) by the computing unit (R),
(103) Executing a first generating process (A) which generates a first opening code (7a) on the basis of at least the first numerical data set (D1) and at least one further data set (D3, D4) by means of the first computing unit (R), wherein the at least one further data set (D3, D4) is selected from a serial number of the value container (1) and information relating to a location of the value container (1), wherein the first numerical data set is only used to generate the opening code and is subsequently cancelled,
(104) Outputting the first opening code (7a) by transmission to a mobile terminal of a user,
(105) Transmitting the first opening code (7a) to the value container (1) via an operating unit (4a, 4b) by the user and followed by
(106) Capturing the biometric data set (5) of the user (6) by means of the second capture unit (2b),
(107) Converting the biometric data record (5) into a second numerical data record (D2) by means of the second generating process (A),
(108) Re-executing the first generating process (A) by the arithmetic unit associated with the value container, which generates a second opening code (7b) on the basis of at least the second numerical data set (D2) and the at least one further data set (D3, D4),
(109) Comparing the first (7a) and the second opening code (7b) by the computing unit assigned to the secure storage unit,
(110) Unlocking the security device (10) if the first (7a) and the second opening code (7b) match according to the comparison step (109), wherein the system (S) is free of a data connection between the value container (1) and the computing unit (R), wherein the first and second generating processes (A) are deterministic and/or the first (7a) and the second opening code (7b) are one-time codes.

2. Method (100) according to claim 1,
**characterised in that**
the first (7a) and the second opening code (7b) are each a numerical code and/or have 6 to 8 digits.

3. Method (100) according to one of the previous claims,
**characterised in that**
the biometric data set (5) is a fingerprint, a hand geometry, an iris pattern, or a sound pattern of a voice of the user (6).

## Revendications

1. Procédé (100) de gestion d'un état d'ouverture d'un coffre-fort (1) à l'aide d'un système approprié (S), lequel comporte le coffre-fort (1) et une unité de calcul (R) séparée spatialement du coffre-fort (1) avec une première unité de saisie (2a),
le coffre-fort (1) comportant un dispositif de sécurité (10) verrouillable et déverrouillable et une seconde unité de saisie (2b),
comportant les étapes suivantes :
101. Saisie d'un ensemble de données biométriques (5) d'un utilisateur (6) à l'aide de la première unité de saisie (2a), l'ensemble de données biométriques (5) n'étant pas stocké dans le système (S) ;
102. Conversion de l'ensemble de données biométriques (5) à l'aide d'un second processus de génération (A) et stockage en un premier ensemble de données numériques (D1) par l'unité de calcul (R) ;
103. Exécution d'un premier processus de génération (A), qui génère un premier code d'ouverture (7a) sur la base au moins du premier ensemble de données numériques (D1) et d'au moins un autre ensemble de données (D3, D4) à l'aide de la première unité de calcul (R), ledit au moins un autre ensemble de données (D3, D4) étant choisi parmi un numéro de série du coffre-fort (1) et une information concernant un emplacement du coffre-fort (1), le premier ensemble de données numériques étant utilisé uniquement pour la génération du code d'ouverture et étant ensuite supprimé ;
104. Emission du premier code d'ouverture (7a) par transmission à un terminal mobile d'un utilisateur ;
105. Transmission du premier code d'ouverture (7a) au coffre-fort (1) par l'intermédiaire d'une unité de commande (4a, 4b) par l'utilisateur, et ensuite,
106. Saisie de l'ensemble de données biométriques (5) de l'utilisateur (6) à l'aide de la seconde unité de saisie (2b) ;
107. Conversion de l'ensemble de données biométriques (5) en un second ensemble de données numériques (D2) à l'aide du second processus de génération (A) ;
108. Exécution à nouveau du premier processus de génération (A) par l'unité de calcul associée au coffre-fort, qui génère un second code d'ouverture (7b) sur la base au moins du second ensemble de données numériques (D2) et dudit au moins un autre ensemble de données (D3, D4) ;
109. Comparaison du premier (7a) et du second code d'ouverture (7b) par l'unité de calcul associée au coffre-fort ;
110. Déverrouillage du dispositif de sécurité (10) dans le cas où, selon l'étape de comparaison (109), le premier (7a) et le second code d'ouverture (7b) coïncident, le système (S) étant exempt d'une liaison de données entre le coffre-fort (1) et l'unité de calcul (R), le premier et le second processus de génération (A) étant conçus de manière déterministe et/ou le premier (7a) et le second code d'ouverture (7b) étant des codes à usage unique.

2. Procédé (100) selon la revendication 1,
**caractérisé par le fait que**
le premier (7a) et le second code d'ouverture (7b) sont chacun un code numérique et/ou sont constitués de 6 à 8 chiffres.

3. Procédé (100) selon l'une des revendications 1 ou 2,
**caractérisé par le fait que**
l'ensemble de données biométriques (5) est une empreinte digitale, une géométrie de la main, un motif d'iris ou un motif sonore d'une voix de l'utilisateur (6).
